# EUROPÄISCHE PATENTANMELDUNG

(11) **EP 3 357 325 A1**
(43) Veröffentlichungstag der Anmeldung: **08.08.2018**
(21) Anmeldenummer: 18154624.3
(22) Anmeldetag: 01.02.2018
(51) Int. Cl.: A01D 89/00

(54) **LANDWIRTSCHAFTLICHE ERNTEMASCHINE**

(30) Priorität: 03.02.2017 DE 102017001012
(71) Anmelder: PÖTTINGER Landtechnik GmbH, 4710 Grieskirchen (AT)
(72) Erfinder: Lehner, DI. Josef, 4732 St. Thomas (AT); Ernst, Christian, 2033 Kleinsierndorf (AT); Fuchs, Joachim, 3322 Viehdorf (AT)
(74) Vertreter: Thoma, Michael

(57) **Zusammenfassung**

Die vorliegende Erfindung betrifft eine landwirtschaftliche Erntemaschine (1), insbesondere Merger, Ladewagen oder Ballenpresse, mit einem Erntegutförderer (4) zum Aufnehmen und Fördern von halm- und/oder blattförmigem Erntegut umfassend eine Stachelwalze (7), die umlaufend antreibbare Förderzinken (8) aufweist, die zwischen Abstreifern (10) angeordnet sind und sich entlang eines Abschnitts ihrer Umlaufbahn (9) zumindest teilweise zwischen die Abstreifer (10) zurückziehen. Erfindungsgemäß sind die Abstreifer (10) mit antreibbaren Fördermitteln (13) versehen, die die Förderwirkung der Förderzinken (8) unterstützen und das von den Förderzinken (8) abgestreifte Erntegut weiterfördern.

## Beschreibung

Die vorliegende Erfindung betrifft eine landwirtschaftliche Erntemaschine, insbesondere Merger, Ladewagen oder Ballenpresse, mit einem Erntegutförderer zum Aufnehmen und Fördern von halm- und/oder blattförmigem Erntegut umfassend eine Stachelwalze, die umlaufend antreibbare Förderzinken aufweist, die zwischen Abstreifern angeordnet sind und sich entlang eines Abschnitts ihrer Umlaufbahn zumindest teilweise zwischen die Abstreifer zurückziehen.

Bei landwirtschaftlichen Erntemaschinen wie Ladewagen, Ballenpressen oder Merger ist es bekannt, geschnittenes Erntegut wie Heu und Gras mittels rotierender Stachelwalzen vom Boden aufzunehmen, die bisweilen auch als Pickup bezeichnet werden. Solche erstrecken sich regelmäßig liegend quer zur Fahrtrichtung und besitzen eine Vielzahl von Förderzinken, die entlang einer Umlaufbahn gesteuert oder ungesteuert angetrieben werden. Die genannten Umlaufbahnen der Förderzinken erstrecken sich dabei regelmäßig aufrecht etwa fahrtrichtungsparallel, wobei die Förderzinken bei ungesteuerter Ausbildung entlang einer Kreisbahn um eine fixe Drehachse rotieren können und bei gesteuerter Ausbildung zusätzlich zur Umlaufbewegung verkippen und/oder ein- und ausfahren können, wobei die Umlaufbahn oft von der Kreisform abweichen und eine entlang der Umlaufbahn durch eine Kurvensteuerfläche beispielsweise in Form einer Führungskulisse oder durch Kurbelsteuerhebel erfolgen kann.

Um das von den Förderzinken aufgenommene Erntegut von den genannten Förderzinken wieder abstreifen zu können, sind zwischen den Förderzinken Abstreifer vorgesehen, die zumeist in Form von streifenförmigen Abstreiferblechen ausgebildet sind und zwischen sich spaltförmige Aussparungen begrenzen, in denen die Förderzinken angeordnet sind und mehr oder weniger weit über die Abstreiferbleche hinaus ausfahren bzw. sich dazwischen zurückziehen können. Die Umlaufbahnen der Förderzinken erstrecken sich koplanar zu den spaltförmigen Ausnehmungen, wobei in einem jeweiligen Spalt zwischen zwei benachbarten Abstreifern ein einzelner Förderzinken oder auch paarweise oder gruppenweise zusammengefasste Zinken laufen können.

Die Abstreifer erstrecken sich dabei bogenförmig um das Zentrum der Umlaufbahnen der Förderzinken herum und laufen im Ablagebereich, in dem das Erntegut von den Förderzinken abgestreift werden soll, meist tangential oder leicht gekrümmt über die Umlaufbahn der Förderzinken hinaus, so dass die Förderzinken zwischen den Abstreifern abtauchen und hierdurch das Erntegut abgestreift wird.

Beim Abstreifen des Ernteguts von den Förderzinken kann es dabei zu einem Aufstauen des Ernteguts bzw. zu Problemen beim Weiterfördern des Ernteguts kommen, beispielsweise insbesondere bei feuchtem Erntegut wie Gras, das dazu neigt, an den Abstreiferblechen festzukleben. Je nach Ausbildung der Erntemaschine und dem sich stromab an die Stachelwalze anschließenden Strukturteil können diese Probleme größer oder kleiner sein. Schließt sich beispielsweise bei einer Ballenpresse oder einem Ladewagen ein Schneidwerk an, durch das das von der Stachelwalze abgestreifte Erntegut mittels eines weiteren Förderrotors hindurchgefördert und zerschnitten wird, können die genannten Probleme beim Weiterfördern im Abstreifbereich zu Verstopfungen führen. Schließt sich beispielsweise ein Querförderband an den Ablagebereich des Stachelrotors an, kann es zu einem ungleichmäßigen Beschicken des Querförderers und damit zu einer ungleichmäßigen Schwadablage kommen.

Um solchen Stau- und Übergabeproblemen im Ablagebereich des Stachelrotors zu begegnen, schlägt die Schrift EP 2 724 606 A1 vor, im Ablagebereich des Stachelrotors bzw. unmittelbar daran anschließend einen zusätzlichen, kleinen Förderrotor in Form einer konturierten Welle vorzusehen, die sich mit ihrer Drehachse etwa parallel zur Stachelrotorachse erstreckt und umfangsseitig stufenförmige Einbuchtungen besitzt, um das Erntegut besser mitzunehmen. Die genannte Förderwelle sitzt dabei unmittelbar am stromabseitigen Ende der Abstreiferbleche und springt über deren Abstreiferoberfläche nach oben vor, so dass das abgestreifte Erntegut auf diese Förderwelle aufläuft. Dabei soll die genannte Förderwelle wechselweise vorwärts und rückwärts rotiert werden, um sich stauende Erntegutmengen besser aufzulösen. Ein solches Vorwärts- und Rückwärts-Rotieren ist jedoch wenig hilfreich, wenn das Erntegut beispielsweise auf ein stromab angeordnetes Querförderband eines Mergers abgeworfen werden soll. Zudem ist die Förderwirkung dieser zusätzlichen Rotorwelle begrenzt, wenn glattes, längliches Erntegut wie beispielsweise Stroh zu bearbeiten ist, das den umfangsseitigen Einbuchtungen der Rotorwelle wenig Angriffsfläche gibt.

Der vorliegenden Erfindung liegt daher die Aufgabe zugrunde, eine verbesserte landwirtschaftliche Erntemaschine der eingangs genannten Art zu schaffen, die Nachteile des Standes der Technik vermeidet und Letzteren in vorteilhafter Weise weiterbildet. Insbesondere soll eine verbesserte Erntegutübergabe an nachfolgende Strukturbaugruppen mit verringerter Stauneigung und gleichmäßigem Erntegutstrom unabhängig vom Ernteguttyp erzielt werden.

Erfindungsgemäß wird die genannte Aufgabe durch eine landwirtschaftliche Erntemaschine gemäß Anspruch 1 gelöst. Bevorzugte Ausgestaltungen der Erfindung sind Gegenstand der abhängigen Ansprüche.

Um die das Erntegut bremsende Wirkung der Abstreifer zu vermeiden und auch im Abstreifbereich, wenn das Erntegut von den Förderzinken des Stachelrotors abgestreift wird, eine das Erntegut weiterfördernde Transportwirkung zu erzielen, werden die herkömmlichen, passiven Abstreiferbleche, die lediglich eine abstreifende Führungswirkung haben, durch aktiv fördernde Abstreifer ersetzt, die zusätzlich zum Abstreifen des Ernteguts von den Förderzinken des Stachelrotors auch noch ein Weiterfördern des Ernteguts bewirken und insgesamt die Förderwirkung des Stachelrotors unterstützen. Erfindungsgemäß sind die Abstreifer mit antreibbaren Fördermitteln versehen, die die Förderwirkung der Förderzinken unterstützen und das von den Förderzinken abgestreifte Erntegut weiterfördern. Hierdurch kann eine Staubildung im Abstreifbereich des Stachelrotors bzw. stromab hiervon vermieden werden. Zudem wird die Förderwirkung der Förderzinken auch vor dem Abstreifbereich und durch die antreibbaren Abstreifer unterstützt, wobei insbesondere die Neigung des Ernteguts, in die spaltförmigen Ausnehmungen zwischen den Abstreifern eingezogen zu werden, verringert werden kann, da das Erntegut von den Förderzinken infolge der Mitförderbewegung der Abstreifer weniger über deren Oberfläche gezogen wird. Insgesamt kann eine verbesserte Förderleistung auch bei niedrigeren Fördergeschwindigkeiten des Stachelrotors erzielt werden.

Die genannten Fördermittel der Abstreifer können in vorteilhafter Weiterbildung der Erfindung endlos umlaufende Förderbänder sein, die die Abstreifer und/oder zumindest teilweise deren dem Erntegut zugewandten Abstreiferoberflächen bilden können und sich zwischen den Umlaufbahnebenen der Förderzinken erstrecken.

Anstelle solcher Förderbänder wäre es ggf. auch denkbar, die Abstreifer mit antreibbaren Rollenförderern zu versehen, beispielsweise in Form jeweils einer Reihe von kleinen antreibbaren Förderwalzen oder Förderrädern beispielsweise in Form von Förderritzeln, die entlang eines jeweiligen Abstreifers hintereinander angeordnet sind und eine antreibbare Rollenförderbahn für das Erntegut bilden.

Die genannten Förderrollen bzw. Rollenförderer können dabei grundsätzlich entlang der gesamten Länge der Abstreifer oder auch nur in einem oder mehreren Teilbereichen hiervon angeordnet sein, insbesondere im Abstreifer- bzw. Ablegebereich, in dem die Förderzinken das Erntegut ablegen, und ggf. in einem Förderbereich zwischen Aufnahmebereich und Abstreifbereich, um die Förderwirkung der Förderzinken zu unterstützen.

Insbesondere können die Fördermittel der Abstreifer jedoch durch die vorgenannten Förderbänder gebildet sein, die als Förderriemen oder Förderkette ausgebildet sein können, die jeweils um zumindest zwei Umlenkrollen oder zumindest eine der genannten Umlenkrollen bzw. -ritzel angetrieben wird, um die Förderriemen bzw. -ketten anzutreiben. Grundsätzlich können auch mehr als zwei Umlenkrollen vorgesehen sein, um das jeweilige Förderband entlang einer gewünschten, aus mehrere Polygonstücken zusammengesetzten Umlaufbahn zu führen, beispielsweise um anschließend an den Abstreifbereich einen weiteren Förderbandabschnitt in einer zum Abstreifbereich geneigten Ausrichtung vorsehen zu können. In Weiterbildung der Erfindung können jedoch zwei Umlenkrollen ausreichend sein, wodurch eine einfache Bauweise sichergestellt werden kann.

In Weiterbildung der Erfindung besitzen die zumindest zwei Umlenkrollen zumindest näherungsweise parallele Rollendrehachsen, die sich quer zu den Ebenen der Umlaufbahnen der Förderzinken erstrecken können. Die Vielzahl von Umlenkrollen, die für die Vielzahl nebeneinander liegenden Förderbänder vorgesehen sind, können dabei vorteilhafterweise jeweils auf einer gemeinsamen Rollendrehachse angeordnet sein, so dass alle Förderbänder gleiche Umlaufbahnen besitzen. Alternativ wäre es aber auch denkbar, verschiedenen Förderbändern verschieden positionierte und/oder im Durchmesser verschiedene Umlenkrollen vorzusehen, beispielsweise um in einem Zentralbereich des Erntegutförderers einen längeren oder kürzeren oder einfach anderen Förderweg entlang der Abstreifer vorzusehen als in seitlichen Randbereichen. Hierdurch kann beispielsweise ein versetzter Verlauf der Abwurfkante der Abstreiferfördermittel eingerichtet werden, um beispielsweise beim Ablegen auf einen Querförderer eines Mergers eine in der Tiefe gleichmäßigere Verteilung des abgeworfenen Ernteguts zu erzielen.

Um eine gleichmäßige Fördergeschwindigkeit der mehreren, nebeneinander laufenden Förderbänder zu erzielen, können die Förderbänder jeweils um zumindest eine Umlenkrolle umlaufen, die für alle Förderbänder gleich groß ist und als Antriebsrolle dient und eine koaxiale Anordnung besitzt.

Um ein günstiges Zusammenspiel mit den Förderzinken des Stachelrotors zu erzielen, können die Förderbänder jeweils um zwei Umlenkrollen geführt sein, von denen eine Umlenkrolle mit ihrer Rollendrehachse und/oder mit ihrem Außenumfang innerhalb der von den Förderzinken überstrichenen Umlaufbahn liegt und von denen die andere Umlenkrolle mit ihrer Rollendrehachse und/oder ihrem Außenumfang außerhalb der von den Förderzinken überstrichenen Umlaufbahn liegt. Unabhängig von der Positionierung der Umlenkrollen können die beiden Umlenkrollen unterschiedliche Durchmesser besitzen, wobei der Durchmesser der kleineren Umlenkrolle eines Förderbands einen Durchmesser von weniger als 50% des Durchmessers der größeren Umlenkrolle des genannten Förderbands aufweisen kann. Insbesondere kann die Anordnung derart beschaffen sein, dass die kleinere Umlenkrolle mit ihrer Rollendrehachse außerhalb der Umlaufbahn der Förderzinken angeordnet ist, während die größere Umlenkrolle mit ihrer Rollendrehachse innerhalb der Förderzinkenumlaufbahn liegt.

Die Förderzinken können zwischen den die Abstreifer bildenden Förderbändern gesteuert oder ungesteuert umlaufen. Bei ungesteuerter Ausbildung der Förderzinken können die Förderzinken auf einer Kreisbahn rotieren und starr an einem drehbar gelagerten Zinkenträger befestigt sein. Um eine einfache Ausbildung zu erzielen, können die Förderzinken dabei an den Umlenkrollen befestigt sein, um die die Förderbänder umlaufen, oder an einer die genannten Umlenkrollen tragenden Rollendrehachse befestigt sein.

Bei gesteuerter Ausbildung der Förderzinken können die Förderzinken zusätzlich zu ihrer Umlaufbewegung Kipp- und/oder Stechbewegungen, d.h. Ein- und Ausfahrbewegungen näherungsweise in Zinkenlängsrichtung ausführen, wobei die Förderzinken hierbei durch eine Kurvensteuerfläche beispielsweise in Form einer Führungskulisse oder Führungsnut gesteuert sein können, die sich um das Zentrum der Umlaufbewegung herum erstreckt und die Umlaufbahn vorgibt. Alternativ oder zusätzlich können zum Steuern der Förderzinken entlang ihrer Umlaufbahn auch kurbelartige Steuerhebel Verwendung finden, wie dies an sich per se bereits bekannt ist.

Vorteilhafterweise werden die Förderzinken und die Fördermittel der Abstreifer von einer gemeinsamen Antriebseinrichtung her angetrieben, beispielsweise durch einen gemeinsamen Hydraulikmotor und/oder einen gemeinsamen Elektromotor und/oder von einem gemeinsamen Antriebsrad her, das durch einen mechanischen Antriebsstrang beispielsweise in Form einer Gelenkwelle angetrieben werden kann. Durch eine gemeinsame Antriebsquelle für den Stachelrotor und die angetriebenen Abstreifer kann nicht nur eine einfache, Platz sparende Ausbildung erzielt werden, sondern auch eine einfache Abstimmung der Fördergeschwindigkeiten der Förderzinken und der Abstreifer zueinander, wobei beispielsweise insbesondere ein Synchronlauf der Förderbänder und der Förderzinken im Förderbereich zwischen Aufnahme- und Abstreifbereichen.

Alternativ wäre es jedoch auch möglich, die Förderzinken des Stachelrotors einerseits und die Fördermittel der Abstreifer andererseits durch separate Antriebsquellen anzutreiben. Solche separaten Antriebsquellen ermöglichen es in einfacher Weise, die Antriebsgeschwindigkeiten von Förderzinken einerseits und Abstreiferfördermitteln andererseits relativ zueinander zu variieren, beispielsweise die Abstreifer schneller fahren zu lassen, während die Förderzinken konstant fördern. Eine solche Veränderung des Verhältnisses der Fördergeschwindigkeiten von Abstreifern und Förderzinken zueinander kann grundsätzlich jedoch auch mit einer gemeinsamen Antriebsquelle erzielt werden, beispielsweise dadurch, dass in den Antriebsstrang zwischen Antriebsquelle und Stachelrotor und/oder Abstreiferfördermittel eine variable oder schaltbare Getriebestufe eingebaut ist.

Um eine Platz sparende, geschützte Anordnung des Antriebs zu erzielen, kann die Antriebsquelle für den Stachelrotor und/oder die Abstreiferfördermittel innerhalb der Abstreifer bzw. innerhalb der Umlaufbahn der Förderbänder der Abstreifer angeordnet werden. Wird beispielsweise ein Hydraulik- oder Elektromotor zum Antreiben sowohl des Stachelrotors als auch der Abstreiferfördermittel verwendet, kann dieser Motor im Hohlraum innerhalb der Abstreiferkontur, vorzugsweise außerhalb der von den Förderzinken überstrichenen Umlaufbahn, angeordnet sein. Der Antriebsstrang zwischen der genannten Antriebsquelle und dem Stachelrotor und/oder den Fördermitteln der Abstreifer kann vorteilhafterweise eine Riemen- oder Kettenantriebsstufe aufweisen.

Die Fördermittel der Abstreifer können insbesondere im Ablegebereich der Förderzinken des Stachelrotors eine ebene Abstreiferfläche bilden, entlang derer das Erntegut von den Förderzinken abgestriffen und weitergefördert wird. Je nach sich anschließender Baugruppe kann die genannte Abstreiferfläche unterschiedlich geneigt angeordnet sein, wobei es vorteilhaft sein kann, wenn die genannte Abstreiferfläche ansteigend gegenüber der Horizontalen geneigt ist, so dass das Erntegut nach Abstreifen von den Förderzinken zumindest ein Stück weit nach oben weitergefördert wird. Dies ermöglicht beispielsweise ein besseres Abwerfen auf einen nachfolgend angeordneten Querförderer eines Mergers, kann jedoch auch für die Übergabe an einen nachfolgenden Förderrotor eines Schneidwerks einer Ballenpresse oder eines Ladewagens vorteilhaft sein.

Die Erfindung wird nachfolgend anhand eines bevorzugten Ausführungsbeispiels und zugehörigen Zeichnungen näher erläutert. In den Zeichnungen zeigen:
- Fig. 1:: eine schematische, perspektivische Darstellung einer landwirtschaftlichen Erntemaschine in Form eines Mergers, der einen Stachelrotor zum Aufsammeln von Erntegut und einen daran anschließenden Querförderer aufweist, der das Erntegut in einem Schwad ablegt,
- Fig. 2:: eine schematische Schnittansicht durch die Erntemaschine aus Fig. 1, die den Stachelrotor und die den Förderzinken des Stachelrotors zugeordneten Abstreifer in Form umlaufender Förderbänder zeigt.

Wie die Figuren zeigen, kann die landwirtschaftliche Erntemaschine 1 zum Anbau an einen nicht dargestellten Schlepper ausgebildet sein und hierfür beispielsweise einen Anbaubock 2 umfassen, der mittels einer Dreipunktanlenkung am Schlepper befestigbar ist. Alternativ wäre es jedoch ebenfalls möglich, die Erntemaschine 1 beispielsweise mittels einer Deichsel an den Schlepper anzuhängen bzw. als Aufsattelgerät auszubilden. Die Erntemaschine 1 kann dabei als Heuwerbungsmaschine in Form eines Mergers ausgebildet sein, wie dies die Figuren zeigen, oder alternativ einen Ladewagen und/oder eine Ballenpresse bilden.

Wie die Figuren zeigen, kann die Erntemaschine 1 dabei einen Maschinenrahmen 3 umfassen, an dem ein Erntegutförderer 4 gelagert ist, wobei der genannte Maschinenrahmen 3 mit dem genannten Anbaubock 2 verbunden sein kann, ggf. aber auch über ein Fahrwerk am Boden abgestützt sein kann. Ist die Erntemaschine 1 als Merger ausgebildet, kann an dem Maschinenrahmen 3 auch ein Querförderer 5 angeordnet sein, auf den der genannte Erntegutförderer 4 Erntegut ablegt, welches der genannte Querförderer 5 dann querfördert und in einem Schwad ablegt. Ist die Erntemaschine 1 als Anbaugerät zum Anbau an einen Schlepper ausgebildet, kann sich der Erntegutförderer 4 liegend quer zur Fahrtrichtung 6 erstrecken, um am Boden liegendes Erntegut aufzunehmen und auf den genannten Querförderer 5 abzulegen, dessen Förderachse sich quer zur genannten Fahrtrichtung 6 erstreckt. Der genannte Erntegutförderer 4 kann dabei in Fahrtrichtung 6 vor dem Querförderer 5 angeordnet sein.

Der genannte Querförderer 5 kann dabei höhenverstellbar am Maschinenrahmen 3 angelenkt sein, insbesondere wenn die Erntemaschine 1 als Ladewagen oder Ballenpresse oder in anderer Weise als Aufsattelgerät ausgebildet ist, um den Erntegutförderer 4 in gewünschter Höhe über den Boden führen zu können. Alternativ kann der Erntegutförderer 4 aber auch in einer vorgegebenen Höhenstellung am Maschinenrahmen 3 befestigt sein, insbesondere wenn der gesamte Maschinenrahmen 3 über den Anbaubock 2 höhenverstellbar ist. Bei einer Ausbildung der Erntemaschine 1 als Merger ist es vorteilhaft, wenn der Erntegutförderer 4 einen Aufsammelabschnitt unterhalb der Querförderers 5 und einen Ablage- und/oder Übergabebereich oberhalb des Querförderers 5 aufweist.

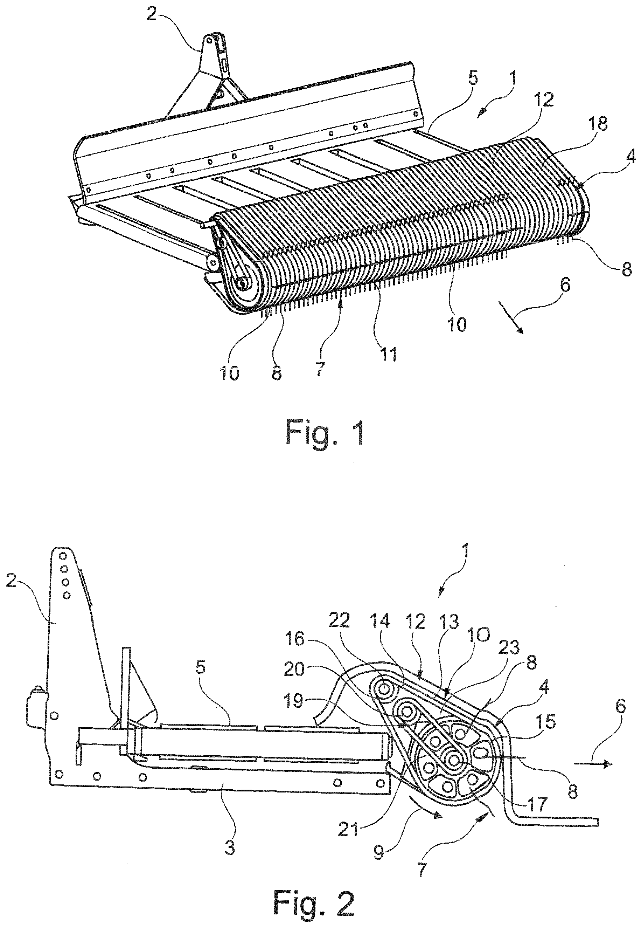

Wie Fig. 1 und 2 zeigen, umfasst der genannte Erntegutförderer 4 einen Stachelrotor 7, der sich liegend quer zur Fahrtrichtung 6 erstrecken kann und eine Vielzahl von Förderzinken 8 umfasst, die in mehreren Reihen nebeneinander quer zur Fahrtrichtung angeordnet sein können und/oder gruppenweise zusammengefasst sind, um entlang Umlaufbahnen, die in aufrechten, näherungsweise fahrtrichtungsparallelen Ebenen liegen, umzulaufen. Die genannten Förderzinken 8 können dabei gesteuert oder ungesteuert die genannten Umlaufbahnen 9 überstreichen, wie dies eingangs bereits erläutert wurde, wobei bei ungesteuertem Umlaufen die Förderzinken 8 starr an Zinkenträgern befestigt sein können, die um eine feste Drehachse umlaufen, während bei gesteuertem Umlauf die Förderzinken 8 beispielsweise in Führungsnuten oder an anderen Steuerflächen geführt umlaufen können, wobei sich die genannten Führungsnuten oder Steuerflächen entlang der Umlaufbahn um das Zentrum der Umlaufbahn 9 herum erstrecken.

Zwischen den Förderzinken 8 sind dabei Abstreifer 10 angeordnet, die streifenförmig ausgebildet sein und in aufrechten Ebenen zwischen den Umlaufbahnebenen der Förderzinken 8 angeordnet sein können.

Zwischen den Abstreifern 10 sind spaltförmige Aussparungen 11 vorgesehen, in denen die genannten Förderzinken 8 ihre Umlaufbahn ausführen können, wobei die Abstreifer 10 derart konturiert sind, dass die genannten Förderzinken 8 entlang eines Sektors ihrer Umlaufbahn 9 zumindest teilweise ein Stück weit zwischen die Abstreifer 10 einfahren, so dass von den Förderzinken 8 erfasstes und gefördertes Erntegut durch die Abstreifer 10 von den Förderzinken 8 abgestreift wird. In einem anderen Sektor der Umlaufbahn 9 hingegen stehen die Förderzinken 8 weiter über die Abstreifer 10 vor, so dass sie Erntegut erfassen und fördern können. Wie Fig. 2 verdeutlicht, kann der Förderbereich der Förderzinken 8, in dem die Förderzinken über die Abstreifer 10 vorstehen und Erntegut aufnehmen und entlang ihrer Umlaufbahn 9 fördern, zumindest einen in Fahrtrichtung betrachtet vorderen, unteren Sektor sowie einen vorderen oberen Sektor des Stachelrotors 7 umfassen, an dem sich dann der Abstreif- und/oder Ablegebereich anschließt, in dem die Förderzinken 8 weiter zwischen die Abstreifer 10 einfahren. Der genannte Abstreif- und/oder Ablagebereich 12 kann in einem oberen hinteren Sektor bezüglich der Fahrtrichtung 6 liegen, so dass das Erntegut insgesamt betrachtet von dem Stachelrotor 7 bodenseitig aufgenommen, sodann über Kopf gefördert und wieder abgelegt wird.

Die genannten Abstreifer 10 sind dabei nicht als passive Leitbleche ausgebildet, sondern in Form aktiv fördernder Fördermittel 13, die gleichzeitig die Abstreifer 10 bilden. Insbesondere können die Fördermittel 13 endlos umlaufende Förderbänder 14 umfassen, die die streifenförmigen Abstreifer 10 bilden und beispielsweise in Form von Förderriemen oder Förderketten ausgebildet sein können, die sich zwischen den Förderzinken 8 des Stachelrotors 7 erstrecken.

Wie Fig. 1 zeigt, können die Förderbänder 14 nebeneinander angeordnet sein und zueinander kongruent angeordnete Umlenkpunkte besitzen, so dass die Förderbänder 14 zusammen einen ebenförmigen Abstreifkorpus bilden, in dessen spaltförmigen Ausnehmungen 11 die Förderzinken 8 laufen.

Wie Fig. 2 zeigt, können dabei alle Förderbänder 14 jeweils um zwei Umlenkrollen 15 und 16 bzw. -scheiben umlaufen, die die Umlaufbahn der Förderbänder 14 festlegen. Dabei kann jedes Förderband 14 seine eigene, separate Umlenkrolle 15 bzw. 16 besitzen, die auf einer gemeinsamen Umlenkwelle gelagert sein können. Alternativ ist es ebenfalls möglich, breite, walzenförmige Umlenkrollen vorzusehen, auf denen dann mehrere oder alle Förderbänder 14 umgelenkt werden. Zumindest kann für die in Fig. 2 gezeigte hintere, obere Umlenkrolle 16 eine solche gemeinsame Walze vorgesehen sein, ggf. mit Spurrillen für die einzelnen Förderbänder 14. Gegebenenfalls kann aber auch die vordere, große Umlenkrolle 15 in Form einer Walze für mehrere Förderbänder 14 ausgebildet sein, beispielsweise dann, wenn die Förderzinken 8 ungesteuert umlaufen und fest an der walzenförmigen Umlenkrolle 16 befestigt sind.

Wie Fig. 2 zeigt, können die beiden Umlenkrollen 15 und 16 unterschiedliche Durchmesser besitzen, wobei insbesondere die dem Stachelrotor 7 direkt zugeordnete Umlenkrolle 15 einen deutlich größeren Durchmesser besitzen kann als die im Abwurfbereich vorgesehene Umlenkrolle 16.

Die Umlenkrolle 15 kann mit ihrer liegenden, quer zur Fahrtrichtung 6 ausgerichteten Rollendrehachse 17 innerhalb der von den Förderzinken 8 überstrichenen Umlaufbahn 9 der Förderzinken 8 angeordnet sein, während die andere Umlenkrolle 16 außerhalb der von den Förderzinken 8 überstrichenen Umlaufbahn 9 angeordnet sein kann.

Wie Fig. 2 zeigt, können die Umlenkrollen 15 und 16 derart angeordnet und bemessen sein, dass die Förderbänder 14 im Ablagebereich 12 des Stachelrotors 7 eine zumindest näherungsweise ebene Abstreiffläche bilden, die sich tangential von der Umlaufbahn 9 der Förderzinken 8 weg erstreckt. Insbesondere können die Förderbänder 14 im Ablagebereich 12 eine in Förderrichtung ansteigend gegenüber der Horizontalen geneigte Abstreiferfläche 18 bilden, die aktiv fördernd ausgebildet ist und das von den Förderzinken 8 abgestreifte Erntegut weiter fördert und im Bereich der Umlenkrolle 16 abwirft bzw. auf den Querförderer 5 übergibt.

Wie Fig. 2 zeigt, kann eine Antriebsquelle 19 zum Antreiben der Förderbänder 14 der Abstreifer 10 beispielsweise in Form eines Hydraulikmotors 20 oder eines Elektromotors oder einer anderen Antriebsbaugruppe vorteilhafterweise im Inneren der von den Förderbändern 14 überstrichenen Umlaufbahn angeordnet sein, d.h. zwischen den Umlenkrollen 15 und 16 sowie zwischen Obertrum und Untertrum der genannten Förderbänder 14. Hierdurch kann eine Platz sparende, die Antriebsquelle 19 schützende Anordnung erzielt werden.

Wie Fig. 2 zeigt, kann die Antriebsbewegung der Antriebsquelle 19 mittels eines Antriebsstrangs 21 auf eine der Umlenkrollen 15 bzw. 16 oder eine damit verbundene Antriebswelle, die die Rollendrehachse bilden kann, übertragen werden, wobei der genannte Antriebsstrang 21 beispielsweise eine Riemenstufe aufweisen kann.

Vorteilhafterweise kann von der genannten Antriebsquelle 19 her gleichzeitig auch der Stachelrotor 7 bzw. dessen Förderzinken 8 angetrieben werden. Sind die genannten Förderzinken 8 direkt an den Umlenkrollen 15 oder der diese tragenden Rollendrehachse 17 befestigt, kann die Kraft- bzw. Drehmomentübertragung direkt erfolgen. Sind indes gesteuerte Förderzinken 8 vorgesehen, kann beispielsweise eine Stachelrotorachse, die sich koaxial zur Rollendrehachse der Umlenkrollen 15 erstrecken und Zinkenträger zwischen den Umlenkrollen antreiben kann, beispielsweise über eine zweite Riemenstufe des Antriebsstrangs 21 angetrieben und an den Hydraulikmotor 20 bzw. die Antriebsquelle 19 angekoppelt werden. Alternativ wäre es jedoch auch möglich, separate Antriebsquellen 19 für den Stachelrotor 7 einerseits und die Förderbänder 14 andererseits vorzusehen.

## Patentansprüche

1. Landwirtschaftliche Erntemaschine, insbesondere Merger, Ladewagen oder Ballenpresse, mit einem Erntegutförderer (4) zum Aufnehmen und Fördern von halm- und/oder blattförmigem Erntegut umfassend einen Stachelrotor (7), der umlaufend antreibbare Förderzinken (8) aufweist, die zwischen Abstreifern (10) angeordnet sind und sich entlang eines Abschnitts ihrer Umlaufbahn (9) zumindest teilweise zwischen die Abstreifer (10) zurückziehen, **dadurch gekennzeichnet, dass** die Abstreifer (10) mit antreibbaren Fördermitteln (13) zum Unterstützen der Förderwirkung der Förderzinken (8) und Weiterfördern des von den Förderzinken (8) abgestreiften Ernteguts versehen sind.

2. Landwirtschaftliche Erntemaschine nach dem vorhergehenden Anspruch, wobei die Fördermittel (13) endlos umlaufende Förderbänder (14) sind, die die Abstreifer (10) bilden und zwischen den Förderzinken (8) umlaufen.

3. Landwirtschaftliche Erntemaschine nach dem vorhergehenden Anspruch, wobei die Förderbänder (14) als Förderriemen oder Förderketten ausgebildet sind.

4. Landwirtschaftliche Erntemaschine nach einem der beiden vorhergehenden Ansprüche, wobei die Förderbänder (14) jeweils um zumindest zwei Umlenkrollen (15, 16) geführt sind, die zueinander etwa parallele Rollendrehachsen (17) besitzen, die sich quer zu den Ebenen der Umlaufbahnen (9) der Förderzinken (8) erstrecken.

5. Landwirtschaftliche Erntemaschine nach dem vorhergehenden Anspruch, wobei eine der zumindest zwei Umlenkrollen (15) mit ihrer Rollendrehachse (17) innerhalb der Umlaufbahn (9) der Förderzinken (8) und die andere der zumindest zwei Umlenkrollen (16) mit ihrer Rollendrehachse (22) außerhalb der Umlaufbahn (9) der Förderzinken (8) angeordnet ist.

6. Landwirtschaftliche Erntemaschine nach einem der beiden vorhergehenden Ansprüche, wobei die zumindest zwei Umlenkrollen (15, 16) unterschiedliche Durchmesser besitzen, wobei vorzugsweise die Umlenkrolle (15) mit dem größeren Durchmesser mit ihrer Rollendrehachse (17) innerhalb der Umlaufbahn (9) der Förderzinken (8) angeordnet ist und die Umlenkrolle (16) mit dem kleineren Durchmesser mit ihrer Rollendrehachse (22) außerhalb der Umlaufbahn (9) der Förderzinken (8) angeordnet ist.

7. Landwirtschaftliche Erntemaschine nach einem der vorhergehenden Ansprüche, wobei die Förderzinken (8) ungesteuert umlaufen und an einer Umlenkrolle (15) der Förderbänder (14) und/oder einer die genannte Umlenkrolle (15) tragenden Rollendrehachse (17) befestigt sind.

8. Landwirtschaftliche Erntemaschine nach einem der Ansprüche 1 bis 6, wobei die Förderzinken (8) entlang ihrer Umlaufbahn (9) gesteuert umlaufen und zusätzlich zur Umlaufbewegung Kipp- und/oder Stechbewegungen in Zinkenlängsrichtung ausführen.

9. Landwirtschaftliche Erntemaschine nach einem der vorhergehenden Ansprüche, wobei die Fördermittel (13) der Abstreifer (10) in einem Ablagebereich (12) der Förderzinken (8), in dem Erntegut von den Förderzinken (8) abgestriffen wird, eine etwa ebene, in Förderrichtung ansteigend geneigte Förderfläche zum aktiven Weiterfördern des Ernteguts bilden.

10. Landwirtschaftliche Erntemaschine nach einem der vorhergehenden Ansprüche, wobei eine Antriebsquelle (19) zum Antreiben der Fördermittel (13) der Abstreifer (10) in einem von den Abstreifern (10) begrenzten Hohlraum (23) angeordnet ist.

11. Landwirtschaftliche Erntemaschine nach dem vorhergehenden Anspruch, wobei der genannte Hohlraum (23), in dem die Antriebsquelle (19) aufgenommen ist, außerhalb der Umlaufbahn (9) der Förderzinken (8) liegt und zwischen den Förderbändern (14) und deren Umlenkrollen (15, 16) angeordnet ist.

12. Landwirtschaftliche Erntemaschine nach dem vorhergehenden Anspruch, wobei die Antriebsquelle (19) zum Antreiben der Fördermittel (13) der Abstreifer (10) einen Hydraulikmotor (20) oder einen Elektromotor umfasst.

13. Landwirtschaftliche Erntemaschine nach einem der vorhergehenden Ansprüche, wobei die Fördermittel (13) der Abstreifer (10) und die Förderzinken (8) des Stachelrotors (7) von einer/der gemeinsamen Antriebsquelle (19) antreibbar sind.

14. Landwirtschaftliche Erntemaschine nach einem der vorhergehenden Ansprüche, wobei die Fördermittel (13) der Abstreifer (10) mit den Förderzinken (8) zumindest entlang eines Abschnitts der Umlaufbahn (9) der Förderzinken (8) synchron mit gleicher Fördergeschwindigkeit antreibbar sind.

15. Landwirtschaftliche Erntemaschine nach einem der vorhergehenden Ansprüche, wobei eine variabel steuerbare Antriebsquelle (19) und/oder ein im Übersetzungsverhältnis variabler Antriebsstrang (21) dazu vorgesehen sind, dass das Verhältnis der Fördergeschwindigkeit der Fördermittel (13) der Abstreifer (10) zur Fördergeschwindigkeit der Förderzinken (8) veränderbar ist.
